# FASCICULE DE BREVET EUROPEEN

(11) **EP 1 798 431 B1**
(45) Date de publication et mention de la délivrance du brevet: **08.04.2009**
(21) Numéro de dépôt: 06291926.1
(22) Date de dépôt: 14.12.2006
(51) Int. Cl.: F16C 11/06

(54) **Dispositif de liaison à rotule entre deux éléments d'une transmission mécanique**
Vorrichtung zur Kugelverbindung zwischen zwei Elementen eines mechanischen Getriebes
Device with a ball-and-socket joint for linking two elements of a mechanical transmission

(30) Priorité: 15.12.2005 FR 0512732
(43) Date de publication de la demande: 20.06.2007
(73) Titulaire: Dura Automotive Systems, 91570 Bievres (FR)
(72) Inventeur: Farges, Thomas, 77350 Le Mee Sur seine (FR)
(74) Mandataire: Schrimpf, Robert

(56) Documents cités:
- EP-A- 0 875 682
- DE-A1- 10 206 085
- DE-A1- 19 640 504

## Description

L'invention concerne un dispositif de liaison à rotule entre deux éléments d'une transmission mécanique.

Ce dispositif est notamment destiné à l'industrie automobile pour constituer l'embout d'un câble de commande à relier à une bielle.

On connaît des dispositifs qui comprennent une tête sphérique à fixer à l'extrémité de l'un des éléments de transmission, une cage apte à recevoir la tête en sorte que la tête soit maintenue par la cage en pouvant y tourner sur elle-même, et un boîtier à fixer à l'autre élément de transmission par l'intermédiaire d'un filtre à vibrations, ce boîtier déterminant un logement qui s'étend selon un axe et qui présente deux ouvertures opposées selon cet axe, le logement et la cage étant conformés et dimensionnés en sorte que l'une des ouvertures permette d'introduire dans le logement la cage et un ressort, cette ouverture étant fermée par un couvercle fixé au boîtier, en sorte que ladite cage soit mobile à translation dans le logement entre une position de service où elle maintient la tête et vers laquelle elle est poussée par le ressort et une position de relâchement où la tête peut être introduite ou extraite de la cage, et en sorte que l'autre ouverture permette d'introduire dans la cage ladite tête ou d'extraire la tête de la cage lorsque la cage est repoussée par la tête vers sa position de relâchement.

Un exemple d'un tel dispositif est décrit dans la demande de brevet DE 102 06 085 de DURA AUTOMOTIVE SYSTEMS GmbH.

Dans cette réalisation, le ressort est constitué par un matériau élastomère injecté dans le couvercle.

On connaît d'autres réalisations dans lesquelles le ressort est un ressort métallique à spires (cf. par exemple la publication EP 0 940 591).

Il a également été préconisé (publication EP 0 875 682) d'enrober la cage et le couvercle par un élément élastique qui fait office de ressort, mais dans cette réalisation le couvercle, qui est rigide et interposé entre la cage et l'élément élastique, doit être déplaçable axialement sur le boîtier pour transmettre à la cage la pression du ressort.

Un but de l'invention est de simplifier les dispositifs connus, de façon à rendre le montage de la tête plus facile et son démontage plus difficile.

Typiquement, l'invention vise à fournir un dispositif dont la valeur d'arrachement de la tête soit de l'ordre de 30kg et puisse être exercée manuellement.

On y parvient selon l'invention avec un dispositif caractérisé en ce que le couvercle est fixe par rapport au boîtier, et en ce que le filtre à vibrations et le ressort sont constitués par une même pièce qui présente une partie de pièce qui entoure le boîtier pour constituer le filtre et une partie de pièce qui pénètre dans le logement pour constituer le ressort.

Le couvercle peut être fixé au boîtier de façon permanente ou être amovible.

Dans des modes de réalisation préférés, le dispositif présente encore une ou plusieurs des caractéristiques suivantes :
- la cage est un tube cylindro-conique à paroi latérale capable d'une déformation latérale et le logement du boîtier est également cylindro-conique ;
- la pièce filtre/ressort est un tube en matériau élastomère qui présente un corps cylindrique placé autour du boîtier pour constituer ledit filtre, qui présente à une extrémité une couronne externe appliquée contre une couronne externe du boîtier, et qui est fermé à son autre extrémité par une paroi transversale dont une portion centrale est introduite dans le logement pour constituer ledit ressort et dont une portion annulaire est maintenue par le couvercle ;
- le boîtier est un tube cylindrique ouvert à chaque extrémité, l'une des extrémités de ce tube comportant une couronne externe ;
- le couvercle est constitué par une bague cylindrique munie à une extrémité d'une couronne ;
- la paroi latérale du boîtier est découpée pour constituer des pattes terminées par des ergots et ladite portion annulaire de la pièce filtre/ressort ainsi que ladite couronne du couvercle comportent des trous pour le passage de ces pattes en sorte que le couvercle soit clipé sur le boîtier par les ergots.

On décrira ci-après un exemple non limitatif de réalisation d'un dispositif conforme à l'invention, en référence aux figures du dessin joint sur lequel :

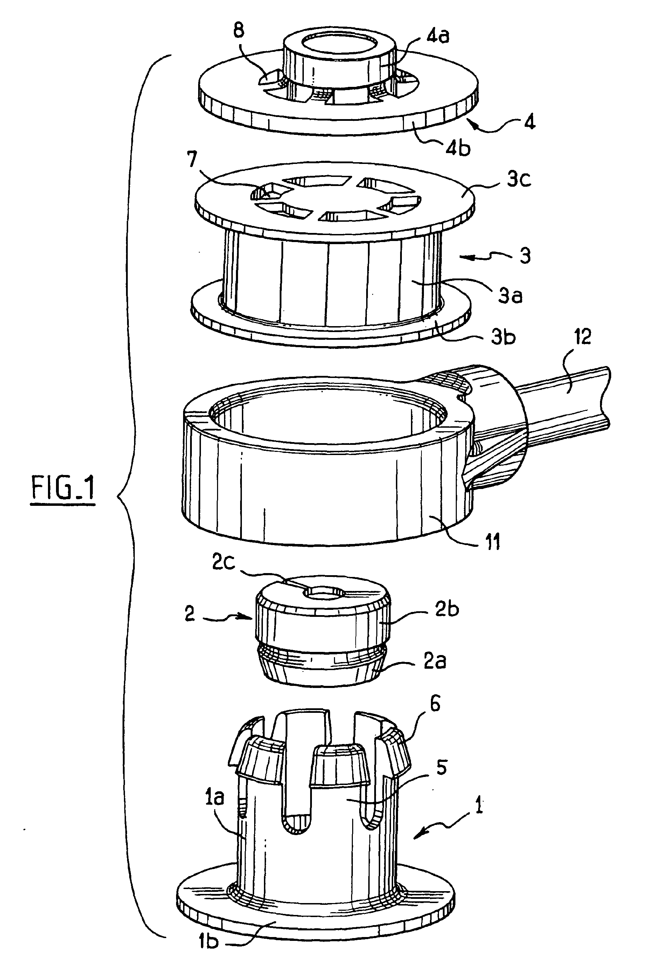

- la figure 1 est une perspective explosée du dispositif ;

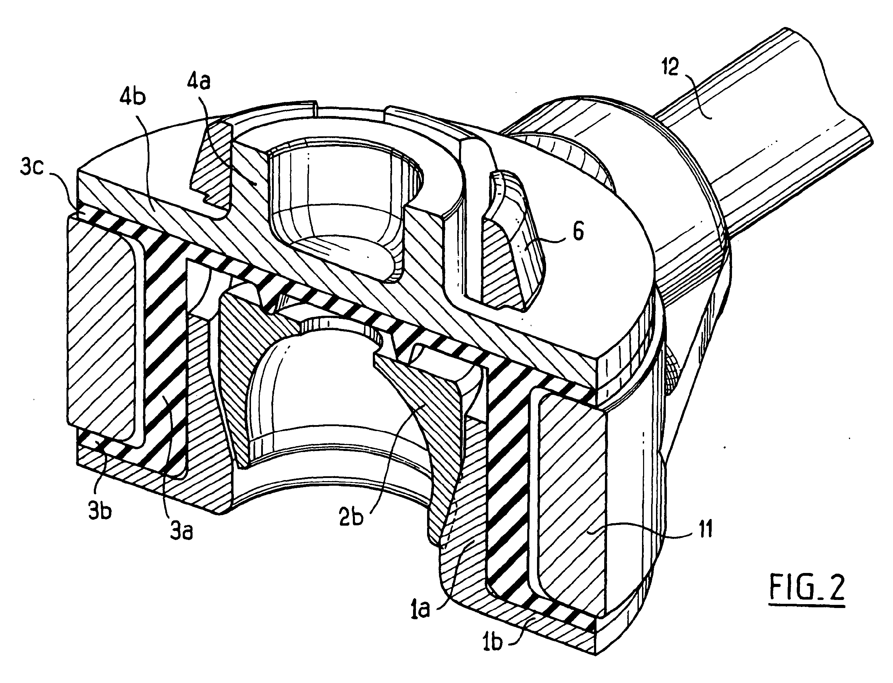

- la figure 2 est une vue en perspective du dispositif coupé par un plan vertical passant par l'axe du boîtier ;

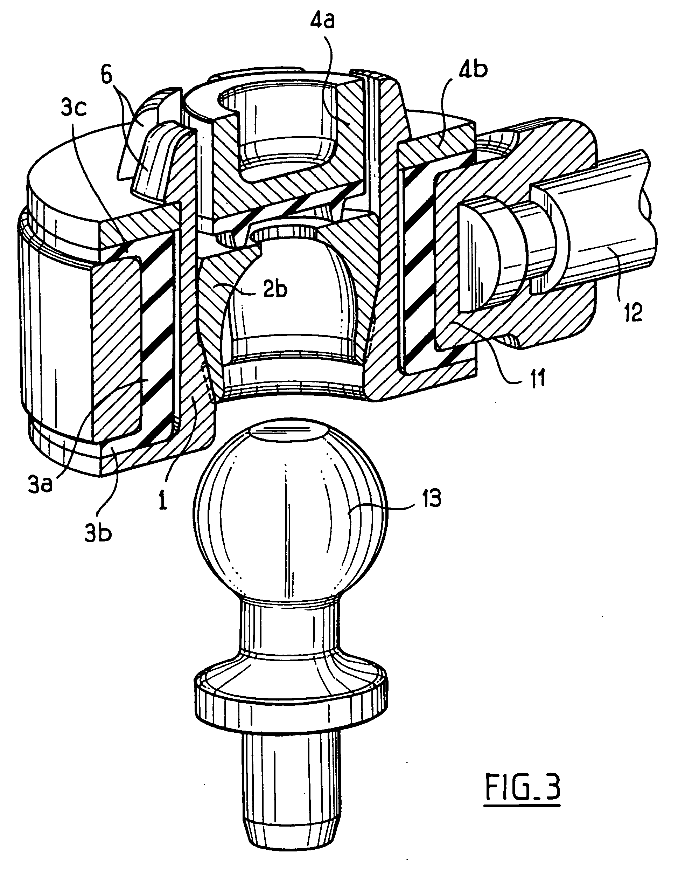

- la figure 3 est une vue en perspective du dispositif coupé par un plan vertical qui passe par l'axe du boîtier et par deux pattes opposées.

Le dispositif représenté comprend un boîtier (1), une cage (2), une pièce (3) formant filtre à vibrations et ressort, et un couvercle de maintien (4).

Le boîtier (1) est un tube ouvert de bout en bout, à paroi latérale (1a) cylindrique, l'une des extrémités du tube comportant une couronne externe (1b) et la paroi latérale du tube étant encochée pour déterminer des pattes (5) terminées par des ergots (6).

Le boîtier détermine un logement qui présente une section inférieure conique et une section supérieure cylindrique.

La cage (2) est un tube qui présente une section (2a) conique extérieurement et une section (2b) cylindrique extérieurement. Le tube est fendu (2c) pour avoir une capacité de déformation transversale. Lesdites sections de la cage correspondent aux sections du logement.

La pièce filtre/ressort (3) est un tube en matériau élastomère qui présente un corps cylindrique (3a), une couronne externe inférieure (3b) et une paroi transversale supérieure (3c) traversée par des trous (7).

La paroi transversale supérieure (3c) de la pièce filtre-ressort présente une portion centrale introduite dans le logement pour constituer ledit ressort et une portion annulaire maintenue par le couvercle.

Le couvercle (4) est une bague cylindrique (4a) munie à une extrémité d'une couronne (4b) traversée par des trous (8).

Le montage s'effectue comme suit :
a) on introduit la cage (2) dans le boîtier (1) ;
b) on enfile la pièce filtre/ressort (3) sur le boîtier par le haut du boîtier en sorte que les pattes (5) du boîtier traversent les trous (7) de la paroi (3c) et jusqu'à ce que la couronne (3b) de la pièce repose sur la couronne (1b) du boîtier ;
c) on applique le couvercle (4) sur la paroi transversale supérieure (3c) de la pièce filtre/ressort en faisant passer les extrémités des pattes (5) dans les trous (8). Le couvercle est ainsi retenu par clipage grâce aux ergots (6).

Dans une variante simplifiée, le dispositif ne comporterait ni pattes ni trous et le couvercle serait maintenu sur le boîtier par d'autres moyens, par exemple par soudure ultrasons comme dans la publication précitée.

L'ensemble ainsi constitué est mis en place dans une bague (11) montée à l'extrémité de l'un des deux éléments à relier. La tête sphérique (13) fixée à l'extrémité de l'autre élément est poussée à force dans la cage.

Dans l'exemple représenté, le boîtier est fixé à une bielle et la tête sphérique est fixée à un câble, par exemple un câble DURA.

L'invention n'est pas limitée à la réalisation qui a été décrite.

## Revendications

1. Dispositif de liaison à rotule entre deux éléments d'une transmission mécanique qui comprend une tête sphérique (13) à fixer à l'extrémité de l'un des éléments, une cage (2) apte à recevoir ladite tête en sorte que la tête soit maintenue par la cage en pouvant y tourner sur elle-même, et un boîtier (1) à fixer à l'extrémité de l'autre élément par l'intermédiaire d'un filtre à vibrations, ce boîtier déterminant un logement qui s'étend selon un axe et qui présente deux ouvertures opposées selon cet axe, le logement et la cage étant conformés et dimensionnés en sorte que l'une des ouvertures permette d'introduire dans le logement la cage et un ressort, cette ouverture étant fermée par un couvercle (4) fixé au boîtier, en sorte que ladite cage soit mobile à translation dans le logement entre une position de service où elle maintient la tête et vers laquelle elle est poussée par le ressort et une position de relâchement où la tête peut être introduite ou extraite de la cage, et en sorte que l'autre ouverture permette d'introduire dans la cage ladite tête ou d'extraire la tête de la cage lorsque la cage est repoussée par la tête vers sa position de relâchement, **caractérisé en ce que** le couvercle (4) est fixe par rapport au boîtier (1), et **en ce que** le filtre à vibrations et le ressort sont constitués par une même pièce (3) qui présente une partie de pièce qui entoure le boîtier pour constituer le filtre et une partie de pièce qui pénètre dans le logement pour constituer le ressort.

2. Dispositif selon la revendication 1 dans lequel la cage est un tube cylindro-conique à paroi latérale capable d'une déformation latérale et le logement du boîtier est également cylindro-conique.

3. Dispositif selon la revendication 1 ou 2 dont ladite pièce est un tube en matériau élastomère qui présente un corps cylindrique (3a) placé autour du boîtier pour constituer ledit filtre, qui présente à une extrémité inférieure une couronne externe (3b) appliquée contre une couronne externe du boîtier, et qui est fermé à son extrémité supérieure par une paroi transversale (3c) dont une portion centrale est introduite dans le logement pour constituer ledit ressort et dont une portion annulaire est maintenue par le couvercle.

4. Dispositif selon la revendication 3 dont le boîtier (1) est un tube cylindrique ouvert à chaque extrémité, l'une des extrémités de ce tube comportant une couronne externe (1b) et la paroi latérale du tube étant découpée pour constituer des pattes (5) terminées par des ergots (6) en prise sur le couvercle.

5. Dispositif selon la revendication 4 dont le couvercle (4) est constitué par une bague cylindrique (4a) munie à une extrémité d'une couronne (4b) traversée par des trous (8).

6. Dispositif selon les revendications 4 et 5 dans lequel ladite paroi transversale supérieure (3c) du tube filtre/ressort (3) ainsi que ladite couronne (1b) du couvercle comportent des trous (7, 8) pour le passage des pattes (5) du boîtier en sorte que le couvercle soit clipé sur le boîtier par les ergots (6).

7. Dispositif selon l'une des revendications 1 à 5 dont ledit logement déterminé par le boîtier (1) présente une section inférieure conique et une section supérieure cylindrique et dont la cage (2) présente des sections correspondantes.

8. Dispositif selon l'une des revendications 1 à 7 et qui comprend une bague (11) fixée à une extrémité de l'un des éléments et dans laquelle est tenue le boîtier par l'intermédiaire de la pièce filtre/ressort (3).

9. Application d'un dispositif selon l'une des revendications 1 à 8 à la liaison à rotule d'un câble de commande et d'une bielle.

## Claims

1. A swivel joint device between two elements of a mechanical transmission system, which includes a spherical head (13) to be attached to the end of one of the elements, a cage (2) designed to receive said head so that the head is held by the cage in such a manner that it can rotate upon itself, and a casing (1) to be attached to the end of the other element by means of a vibration filter, this casing forming a housing that lies along an axis and that has two openings that are opposed to each other on this axis, with the housing and the cage being shaped and dimensioned so that one of the openings allows the cage and a spring to be inserted into the housing, this opening being closed off by a lid (4) attached to the casing, so that said cage is able to move linearly in the housing between a working position in which it holds the head and toward which it is pushed by the spring, and a rest position in which the head can be inserted into or extracted from the cage, and so that the other opening allows said head to be inserted into the cage, or the head to be extracted from the cage, when the cage is pressed back by the head toward its rest position, **characterised in that** the lid (4) is fixed in relation to the casing (1), and **in that** the vibration filter and the spring are composed of a single part (3) that has a part component that surrounds the casing to constitute the filter and a part component that enters into the housing to constitute the spring.

2. A device according to claim 1, wherein the cage is a tapered tube with a side wall that is capable of lateral deformation, and where the housing of the casing is also a tapered cylinder.

3. A device according to claim 1 or 2, wherein said part is a tube made from an elastomer material, which has a cylindrical body (3a) placed around the casing to constitute said filter, at one lower end has an outer ring (3b) applied against an outer ring of the casing, and which is closed off at its upper end by a transverse wall (3c), a central portion of which is inserted into the housing to constitute said spring, and of which an annular portion is held by the lid.

4. A device according to claim 3, wherein the casing (1) is a cylindrical tube open at each end, with one of the ends of this tube having an outer ring (1b) and the lateral wall of the tube being cut away to constitute feet (5) that end in spurs (6) which engage with the lid.

5. A device according to claim 4, wherein the lid (4) is composed of a cylindrical ring (4a) equipped at one end with a ring (4b) that is traversed by holes (8).

6. A device according to claims 4 and 5, wherein said upper transverse wall (3c) of the filter / spring tube (3) and said ring (1b) of the lid include holes (7, 8) for passage of the feet (5) of the casing so that the lid is clipped onto the casing by the spurs (6).

7. A device according to any of the claims 1 to 5, wherein said housing, formed by the casing (1), has a lower conical section and an upper cylindrical section, and the cage (2) has corresponding sections.

8. A device according to any of the claims 1 to 7, which includes a ring (11), fixed to one end of one of the elements, and in which the casing is held by means of the filter / spring part (3).

9. Application of a device according to one of claims 1 to 8 to the swivel link of a control cable and connecting rod.

## Patentansprüche

1. Kugelgelenkvorrichtung zwischen zwei Elementen eines mechanischen Getriebes, die einen kugelförmigen, am Ende des einen der Elemente zu befestigenden Kopf (13) umfasst, einen Käfig (2), der geeignet ist, den Kopf aufzunehmen, damit der Kopf vom Käfig gehalten wird, wenn er sich dort um sich selbst drehen kann, und ein am Ende des anderen Elements mittels eine Vibrationsfilters zu befestigendes Gehäuse (1), wobei dieses Gehäuse eine Aufnahme festlegt, die sich entlang einer Achse erstreckt und die zwei gegenüberliegende Öffnungen entlang dieser Achse aufweist, wobei die Aufnahme und der Käfig ausgelegt und dimensioniert sind, damit die eine der Öffnungen zulässt, in die Aufnahme den Käfig und eine Feder aufzunehmen, wobei diese Öffnung von einem am Gehäuse befestigten Deckel (4) geschlossen wird, damit der Käfig in Verschiebung in der Aufnahme beweglich ist zwischen einer Betriebsposition, in der er den Kopf hält und in deren Richtung er von der Feder gedrückt wird, und einer Lockerungsposition, in der der Kopf in den Käfig eingeführt oder aus ihm herausgezogen werden kann, damit die andere Öffnung zulässt, in den Käfig den Kopf einzuführen oder den Kopf aus dem Käfig herauszuziehen, wenn der Käfig vom Kopf in seine Lockerungsposition zurückgedrückt wird, **dadurch gekennzeichnet, dass** der Deckel (4) fest in Bezug auf das Gehäuse (1) ist und dass der Vibrationsfilter und die Feder von demselben Stück (3) gebildet werden, das einen Teil des Stücks bildet, das das Gehäuse umgibt, um den Filter zu bilden, und einen Teil des Stücks, das in die Aufnahme eindringt, um die Feder zu bilden.

2. Vorrichtung gemäß Anspruch 1, bei der der Käfig ein zylindrokonisches Rohr mit Seitenwand ist, das zu einer seitlichen Verformung in der Lage ist, und die Aufnahme des Gehäuses auch zylindrokonisch ist.

3. Vorrichtung gemäß Anspruch 1 oder 2, deren Stück ein Rohr aus elastomerem Material ist, das einen zylindrischen Körper (3a) aufweist, der um das Gehäuse platziert ist, um den Filter zu bilden, der an einem unteren Ende einen äußeren Kranz (3b) aufweist, der gegen einen äußeren Kranz des Gehäuses angesetzt ist und der an seinem oberen Ende von einer Querwand (3c) geschlossen ist, deren einer zentraler Abschnitt in die Aufnahme eingeführt ist, um die Feder zu bilden und deren einer ringförmiger Abschnitt vom Deckel gehalten wird.

4. Vorrichtung gemäß Anspruch 3, deren Gehäuse (1) ein zylindrisches Rohr ist, das an jedem Ende geöffnet ist, wobei das eine der Enden dieses Rohrs einen äußeren Kranz (1 b) umfasst und die Seitenwand des Rohrs eingeschnitten ist, um Klauen (5) zu bilden, die von Zapfen (6) in Eingriff auf dem Deckel abgeschlossen werden.

5. Vorrichtung gemäß Anspruch 4, deren Deckel (4) von einem zylindrischen Ring (4a) gebildet wird, der an einem Ende mit einem Kranz (4b) versehen ist, der von Löchern (8) durchdrungen ist.

6. Vorrichtung gemäß den Ansprüchen 4 und 5, bei der die obere Querwand (3c) des Filter/Feder-Rohrs (3) sowie der Kranz (1b) des Deckels Löcher (7,8) umfassen für den Durchgang der Klauen (5) des Gehäuses, damit der Deckel durch die Zapfen (6) auf das Gehäuse geklemmt wird.

7. Vorrichtung gemäß einem der Ansprüche 1 bis 5, deren von dem Gehäuse (1) festgelegte Aufnahme einen unteren konischen Abschnitt aufweist und einen oberen zylindrischen Abschnitt und deren Käfig (2) entsprechende Abschnitte aufweist.

8. Vorrichtung gemäß einem der Ansprüche 1 bis 7 und die einen Ring (11) umfasst, der an einem Ende des einen der Elemente befestigt ist, und in der das Gehäuse mittels des Filter/Feder-Stücks (3) gehalten wird.

9. Verwendung einer Vorrichtung gemäß einem der Ansprüche 1 bis 8 zur Kugelverbindung eines Steuerseils und einer Pleuelstange.
